(19) Europäisches Patentamt / European Patent Office / Office européen des brevets

(11) **EP 3 024 786 B1**

(12) **EUROPEAN PATENT SPECIFICATION**

(45) Date of publication and mention of the grant of the patent:
**24.06.2020 Bulletin 2020/26**

(51) Int Cl.:
*C03C 3/087* (2006.01)   *C03C 4/02* (2006.01)
*C03C 4/10* (2006.01)

(21) Application number: **14739844.0**

(22) Date of filing: **18.07.2014**

(86) International application number:
**PCT/EP2014/065487**

(87) International publication number:
**WO 2015/011043 (29.01.2015 Gazette 2015/04)**

(54) **HIGH INFRARED TRANSMISSION GLASS SHEET**

GLASSCHEIBE MIT HOHER INFRAROTSTRAHLENDURCHLÄSSIGKEIT

FEUILLE DE VERRE À HAUTE TRANSMISSION AUX RAYONNEMENTS INFRAROUGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2013 EP 13177775**

(43) Date of publication of application:
**01.06.2016 Bulletin 2016/22**

(73) Proprietor: **AGC Glass Europe**
**1348 Louvain-La-Neuve (BE)**

(72) Inventors:
• **LAMBRICHT, Thomas**
**B-1360 Perwez (BE)**
• **DOGIMONT, Audrey**
**B-1495 Sart-Dames-Avelines (BE)**

(74) Representative: **Bayot, Daisy**
**AGC Glass Europe**
**Technovation Centre**
**IP Department**
**Rue Louis Blériot, 12**
**6041 Gosselies (BE)**

(56) References cited:
WO-A1-2009/128003    WO-A1-2013/021975
US-A- 2 599 349    US-A- 4 526 872
US-A1- 2007 161 492

**Description**

**1. Field of the Invention**

The present invention relates to a glass sheet with high infrared transmission.

The invention also relates to the use of such a glass sheet in a device using infrared radiation propagating essentially inside said sheet.

Because of its high infrared (IR) transmission, the glass sheet according to the invention can in fact be used advantageously in a touchscreen or touch panel or touchpad, for example, using optical technology called planar scatter detection (PSD) or frustrated total internal reflection (FTIR) (or any other technology that requires a high IR transmission) to detect the position of one or more objects (e.g. a finger or a stylus) on a surface of said sheet.

Consequently, the invention also relates to a touchscreen, a touch panel or a touchpad comprising such a glass sheet.

**2. Solutions of the Prior Art**

PSD and FTIR technologies allow multiple detection touchscreens/panels to be obtained that are inexpensive and that can have a relatively significant touch-sensitive surface (for example, 3 to 100 inches) while also having a low thickness.

These two technologies involve:

(i) injection of infrared radiation (IR) by means of LEDs, for example, into an infrared transparent substrate from one or several edges/sides;
(ii) propagation of the infrared radiation inside said substrate (which thus acts as waveguide) by means of an optical phenomenon of total internal reflection (no radiation "exits" from the substrate);
(iii) contact of the surface of the substrate with any object (for example, a finger or stylus) causing a local disturbance by diffusion of the radiation in all directions; some of the deviated rays will thus be able to "exit" from the substrate.

In FTIR technology the deviated rays form an infrared light point on the inside surface of the substrate opposite the touch sensitive surface. These are seen by a special camera located below the device.

PSD technology itself involves two additional steps to the list of steps (i)-(iii):

(iv) analysis of the resulting IR radiation at the level of the edge of the substrate by a detector; and
(v) calculation by algorithms of the position(s) of the object(s) in contact with the surface from the radiation detected.
This technology is disclosed in particular in document US 2013/021300 A1.

Basically, glass is a material of choice for touch panels because of its mechanical properties, its durability, its scratch resistance, its optical clarity and because it can be chemically or thermally strengthened.

In the case of glass panels used for PSD or FTIR technologies with a very substantial surface area and therefore with a relatively large length/width, the optical path of the injected IR radiation is long. In this case, the absorption of the IR radiation by the material of the glass thus has a significant effect on the sensitivity of the touch panel, which can then decrease undesirably in the length/width of the panel. In the case of glass panels used for PSD or FTIR technology with a smaller surface area and therefore with a shorter optical path of the injected IR radiation, the absorption of the IR radiation by the material of the glass also has an effect particularly on the energy consumption of the device into which the glass panel is integrated.

Therefore, a glass sheet that is highly transparent to infrared radiation is of great use in this context in order to guarantee an unimpaired or sufficient sensitivity over the whole of the touch sensitive surface when this surface is substantial. In particular, a glass sheet that has the lowest possible absorption coefficient at the wavelength of 1050 nm generally used in these technologies is desired.

To obtain a high infrared transmission (as well as transmission in the visible) it is known to reduce the total iron content in the glass (expressed in terms of $Fe_2O_3$ according to standard practice in the field) to obtain low-iron glasses. Silicate-based glasses always contain iron as this is present as an impurity in numerous raw materials used (and in particular sand). Iron exists in the structure of glass in the form of ferric irons $Fe^{3+}$ and ferrous ions $Fe^{2+}$. The presence of ferric ions $Fe^{3+}$ gives the glass a slight absorption of low wavelength visible light and a higher absorption in the near ultraviolet (absorption band centred on 380 nm), while the presence of ferrous ions $Fe^{2+}$ (sometimes expressed as oxide FeO) causes a high absorption in the near infrared (absorption band centred on 1050 nm). Thus, the increase in the total iron content (in its two forms) accentuates the absorption in the visible and the infrared. Moreover, a high concentration of ferrous ions $Fe^{2+}$ causes a decrease in the transmission in the infrared (in particular the near infrared). However, to obtain an absorption coefficient at wavelength 1050 nm that is sufficiently low for touch sensitive applications solely by acting on the total iron content, such a significant decrease in the total iron content would be required that (i) either it would incur production costs that are much too high as a result of the need for very pure raw materials (which sometimes do not even exist in sufficiently pure state), (ii) or this would pose production problems (in particular premature wear of the furnace and/or difficulties in heating the glass in the furnace).

To further increase the transmission of the glass, it is also known to oxidise the iron present in the glass, i.e. to reduce the content of ferrous ions in favour of the content of ferric ions. The degree of oxidation of a glass is given by its redox defined as the atomic weight ratio of $Fe^{2+}$ in relation to the total weight of the iron atoms present in the glass, $Fe^{2+}$/total Fe.

In order to reduce the redox of the glass it is known to add an oxidising component to the batch of raw materials. However, the majority of known oxidising agents (sulphates, nitrates ...) do not have a sufficiently high oxidising power to obtain the IR transmission values sought for application to touch panels using FTIR or PSD technology or must be added in too high a quantity with collateral disadvantages such as cost, colouration, incompatibility with the production process etc.

US 2007/0161492 A1 discloses coloured glass compositions with high IR transmittance, that are employed in automotive and architectural applications.

### 3. Objectives of the Invention

The objective of the invention in at least one of its embodiments is to provide a glass sheet with a high infrared transmission. In particular, an object of the invention is to provide a glass sheet with a high transmission to near infrared radiation.

The objective of the invention in at least one of its embodiments is to provide a glass sheet with a high infrared transmission that in particular is especially advantageous in a device using an infrared radiation that propagates essentially inside said sheet.

Another objective of the invention in at least one of its embodiments is to provide a glass sheet which, when used as touch sensitive surface in touchscreens, touch panels or touchpads of large dimension, does not cause any loss of sensitivity of the touch sensitive function, or if so very little.

Another objective of the invention in at least one of its embodiments is to provide a glass sheet which, when used as touch sensitive surface in touchscreens, touch panels or touchpads of more moderate dimensions, is beneficial to the energy consumption of the device.

Another objective of the invention in at least one of its embodiments is to provide a glass sheet with a high infrared transmission and with an acceptable aesthetic appearance for the chosen application.

Finally, the objective of the invention is also to provide a glass sheet with a high infrared transmission that is inexpensive to produce.

### 4. Outline of the Invention

The invention relates to a glass sheet having a composition that comprises in a content expressed in percentages of the total weight of the glass:

$55 \leq SiO_2 \, 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$5 < BaO \leq 20\%$
$0.002 \leq$ total iron (expressed in the form of $Fe_2O_3$) $\leq 0.02\%$.

In accordance with a particular embodiment said composition additionally comprises a chromium content such as : $0.0001\% \leq Cr_2O_3 \leq 0.03\%$ expressed in a percentage of the total weight of glass, and in that it has a content of $Fe^{2+}$ (expressed in the form of FeO) of less than 20 ppm.

Thus, the invention is based on a completely novel and inventive approach since it enables the posed technical problem to be solved. In fact the inventors have surprisingly shown that it was possible to obtain a highly IR transparent glass sheet without too negative an impact on its aesthetic appearance, its colour, by combining in a glass composition a low content of iron and of chromium, especially known as a powerful colouring agent in so-called "selective" coloured glasses, in a specific content range.

In the whole of the present text, when a range is indicated all the whole and subdomain values in the numerical range are expressly included as if explicitly stated. Likewise, in the whole of the present text, unless explicitly mentioned, the percentage content values are weight values expressed in relation to the total weight of the glass.

Other features and advantages of the invention will become clearer on reading the following description.

In the sense of the invention glass is understood to mean a material that is completely amorphous, and thus excludes any crystalline material, even partially (such as vitrocrystalline or glass ceramic materials, for example).

The glass sheet according to the invention can be a glass sheet obtained by a float, drawing or laminating process or any other known process for fabricating a glass sheet from a molten glass composition.

According to the invention different raw materials containing chromium can be used to introduce chromium into the glass composition. In particular, chromium oxides, $CrO$, $Cr_2O_3$, $CrO_2$ or $CrO_3$ are possible, and relatively pure, sources of chromium. Other substances that are rich in chromium can also be used such as chromates, chromites and any other chromium-based chemical compound. However, compounds containing chromium in its 6+ form are less preferred for reasons of safety.

The glass sheet according to the invention can have various and relatively significant dimensions. For example, it can have dimensions ranging up to 3.21 m x 6 m or 3.21 m x 5.50 m or 3.21 m x 5.10 m or 3.21 m x 4.50 m (referred to as a PLF glass sheet) or also, for example, 3.21 m x 2.55 m or 3.21 m x 2.25 m (referred to as a DLF glass sheet).

The glass sheet according to the invention can have a thickness in the range of between 0.05 and 25 mm. Advantageously, in the case of the application for touch panels, the glass sheet according to the invention can have a thickness varying between 0.1 and 6 mm. For reasons of weight in the case of the application for touch panels, the thickness of the glass sheet according to the invention is preferably 0.1 to 2.2 mm.

According to the invention the composition of the invention has a content of total iron such as: $0.002 \leq$ total iron (expressed in the form of $Fe_2O_3$) $\leq 0.02\%$. A content of total iron (expressed in the form of $Fe_2O_3$) of less than or equal to 0.06% by weight enables the IR transmission of the glass sheet to be increased further. The minimum value means that the cost of the glass will not be disadvantaged too much, since such low iron values often require costly very pure raw materials or the purification of raw materials.

According to a particularly advantageous embodiment of the invention the composition has a chromium content such as: $0.0005\% \leq Cr_2O_3 \leq 0.03\%$. Particularly preferred, the composition of the invention has a chromium content such as: $0.001\% \leq Cr_2O_3 \leq 0.03\%$.

According to an advantageous embodiment of the invention the composition has a chromium content (expressed in the form of $Cr_2O_3$) such as: $0.002\% \leq Cr_2O_3 \leq 0.03\%$. Such ranges of chromium contents enable a significant transmission in the IR to be obtained without too negative an impact on the aesthetic appearance of the glass sheet. Even more preferred, the composition of the invention has a chromium content such as: $0.0001\% \leq Cr_2O_3 \leq 0.02\%$ or even better such as $0.001\% \leq Cr_2O_3 \leq 0.02\%$ and preferably such as $0.002\% \leq Cr_2O_3 \leq 0.02\%$.

According to another embodiment of the invention the composition has a content of $SiO_2$ expressed as a percentage in total weight of the glass such as: $55 \leq SiO_2 \leq 78\%$.

According to another embodiment of the invention, which can be considered in combination with the preceding embodiment, the composition has a content of $Al_2O_3$ expressed as a percentage in total weight of the glass such as: $0 \leq Al_2O_3 \leq 18\%$.

According to another embodiment of the invention the composition has a content of $Fe^{2+}$ (expressed in the form of FeO) of less than 20 ppm. The composition preferably has a content of $Fe^{2+}$ (expressed in the form of FeO) of less than 10 ppm. Particularly preferred, the composition has a content of $Fe^{2+}$ (expressed in the form of FeO) of less than 5 ppm.

According to the invention the glass sheet has a high IR transmission. More precisely, the glass sheet of the present invention has a high transmission of radiation in the near infrared. To quantify the high transmission of the glass in the infrared range, the absorption coefficient at the wavelength 1050 nm, which should thus be as low as possible in order to obtain a high transmission, will be used in the present description. The absorption coefficient is defined by the relation between the absorbance and the length of the optical path covered by an electromagnetic radiation in a given medium. It is expressed in $m^{-1}$. It is therefore independent of the thickness of the material, but depends on the wavelength of the absorbed radiation and the chemical nature of the material.

In the case of glass the absorption coefficient ($\mu$) at a chosen wavelength $\lambda$ can be calculated from a measurement in transmission ($T$) as well as the refractive index n of the material (thick = thickness), wherein the values of n, p and T are a function of the chosen wavelength $\lambda$:

$$\mu = -\frac{1}{thick} \cdot ln\left[\frac{-(1-\rho)^2 + \sqrt{(1-\rho)^4 + 4.T^2.\rho^2}}{2.T.\rho^2}\right]$$

where

$$\rho = (n\text{-}1)^2/(n+1)^2.$$

Advantageously, the glass sheet according to the invention has an absorption coefficient at wavelength 1050 nm of less than or equal to 5 $m^{-1}$. Preferably, the glass sheet according to the invention has an absorption coefficient at wavelength 1050 nm of less than or equal to 3.5 $m^{-1}$. Particularly preferred, the glass sheet according to the invention has an absorption coefficient at wavelength 1050 nm of less than or equal to 2 $m^{-1}$. Even more preferred, the glass sheet according to the invention has an absorption coefficient at wavelength 1050 nm of less than or equal to 1 $m^{-1}$.

Advantageously, the glass sheet according to the invention has an absorption coefficient at wavelength 950 nm of less than or equal to 5 $m^{-1}$. Preferably, the glass sheet according to the invention has an absorption coefficient at wavelength 950 nm of less than or equal to 3.5 $m^{-1}$. Particularly preferred, the glass sheet according to the invention has an absorption coefficient at wavelength 950 nm of less than or equal to 2 $m^{-1}$. Even more preferred, the glass sheet according to the invention has an absorption coefficient at wavelength 950 nm of less than or equal to 1 $m^{-1}$.

Advantageously, the glass sheet according to the invention has an absorption coefficient at wavelength 850 nm of less than or equal to 5 $m^{-1}$. Preferably, the glass sheet according to the invention has an absorption coefficient at wavelength 850 nm of less than or equal to 3.5 $m^{-1}$. Particularly preferred, the glass sheet according to the invention has an absorption coefficient at wavelength 850 nm of less than or equal to 2 $m^{-1}$. Even more preferred, the glass sheet according to the invention has an absorption coefficient at wavelength 850 nm of less than or equal to 1 $m^{-1}$.

According to an embodiment of the invention, in addition to the impurities contained in particular in the raw materials, the composition of the glass sheet can comprise a small proportion of additives (such as agents aiding the melting or refining of the glass) or elements originating from the dissolution of the refractory materials forming the melting furnaces.

According to an embodiment of the invention the composition of the glass sheet can additionally comprise one or more colouring agents in a quantity adjusted as a function of the sought effect. This(these) colouring agent(s) can serve, for example, to "neutralise" the colour generated by the presence of the chromium and thus make the colouration of the glass of the invention more neutral, colourless. Alternatively, this(these) colouring agent(s) can serve to obtain a desired colour other than that generated by the presence of the chromium.

According to another advantageous embodiment of the invention that may be combined with the preceding embodiment, the glass sheet can be coated with a layer or a film that enables the colour that can be generated by the presence of chromium to be modified or neutralised (e.g. a film of coloured PVB).

The glass sheet according to the invention can advantageously be chemically or thermally toughened.

According to an embodiment of the invention the glass sheet is coated with at least one thin electrically conductive transparent layer. A thin electrically conductive transparent layer according to the invention can be, for example, a layer based on $SnO_2$:F, $SnO_2$:Sb or ITO (indium tin oxide), ZnO:Al or also ZnO:Ga.

According to another advantageous embodiment of the invention the glass sheet is coated with at least one antireflective (or antiglare) layer. This embodiment is clearly advantageous when the glass sheet of the invention is used as the front face of a screen. An antireflective layer according to the invention can be, for example, a layer based on porous silica with a low refractive index or can be formed from several layers (stack), in particular a stack of layers of dielectric material alternating layers of low and high refractive index and terminating with a layer of low refractive index.

According to another embodiment the glass sheet is coated with at least one anti-fingerprint layer in order to reduce/prevent fingerprints from showing. This embodiment is also advantageous in the case where the glass sheet of the invention is used as the front face of a touch screen. Such a layer can be combined with a thin electrically conductive transparent deposited on the opposite face. Such a layer can be combined with an antireflective layer deposited on the same face, wherein the anti-fingerprint layer is on the outside of the stack and thus covers the antireflective layer.

The glass sheet according to the invention can also be treated on at least one of its main faces, for example, using an acid or base delustering process in order to generate anti-fingerprint properties, for example, or also antiglare or anti-sparkling properties. This is also advantageous in particular in the case of the glass sheet of the invention being used as touch sensitive surface/screen.

Depending on the desired applications and/or properties, other layer(s) / other treatments can be deposited / conducted on one face and/or the other of the glass sheet according to the invention.

In addition, the invention also relates to a screen or panel or pad comprising at least one glass sheet according to the invention, wherein said glass sheet defines a touch sensitive surface. The touchscreen or panel or pad preferably uses FTIR or PSD optical technology. In particular, the glass sheet is advantageously mounted on top of a display surface.

Finally, the invention also relates to the use of a glass sheet having a composition that comprises the following in a content expressed in percentages of the total weight of glass:

$55 \leq SiO_2 \leq 85\%$

$0 \leq Al_2O_3 \leq 30\%$

$0 \leq B_2O_3 \leq 20\%$

$0 \leq Na_2O \leq 25\%$

$0 \leq CaO \leq 20\%$

$0 \leq MgO \leq 15\%$

$0 \leq K_2O \leq 20\%$

$5 < BaO \leq 20\%$

$0.002 \leq$ total iron (expressed in the form of $Fe_2O_3$) $\leq 0.06\%$

$0.0001\% \leq Cr_2O_3 \leq 0.06\%$

in a device using an infrared radiation that propagates essentially inside said sheet. The term radiation that propagates essentially inside the sheet is understood to mean a radiation that travels in the bulk of the glass sheet between the two main faces of the sheet.

Advantageously, according to an embodiment of the use of the invention the propagation of the infrared radiation occurs by total internal reflection. According to this embodiment the infrared radiation can be injected inside the glass sheet from one or more sides of said sheet. Side of the sheet is understood to be each of the four surfaces defined by the thickness of the sheet and substantially perpendicular to the two main faces of the sheet. Alternatively, still according to this embodiment, the infrared radiation can be injected inside the glass sheet from one or both of the main faces at a certain angle.

According to a particularly advantageous embodiment of the use of the invention the composition has a chromium content such as: $0.0005\% \leq Cr_2O_3 \leq 0.06\%$. Particularly preferred, the composition has a chromium content such as: $0.001\% \leq Cr_2O_3 \leq 0.06\%$. Even more preferred, the composition of the invention has a chromium content such as: $0.002\% \leq Cr_2O_3 \leq 0.06\%$.

According to an advantageous embodiment of the use of the invention the composition has a chromium content (expressed in the form of $Cr_2O_3$) such as: $0.0001\% \leq Cr_2O_3 \leq 0.03\%$ or even better such as $0.001\% \leq Cr_2O_3 \leq 0.03\%$ and still more preferred such as: $0.002\% \leq Cr_2O_3 \leq 0.03\%$. Such ranges of chromium contents enable a significant transmission in the IR to be obtained without too negative an impact on the aesthetic appearance of the glass sheet. Even more preferred, the composition of the invention has a chromium content such as: $0.0001\% \leq Cr_2O_3 \leq 0.02\%$ or even better such as $0.001\% \leq Cr_2O_3 \leq 0.02\%$ and preferably such as $0.002\% \leq Cr_2O_3 \leq 0.02\%$.

According to another embodiment of the use of the invention the composition has a content of $SiO_2$, expressed as a percentage in total weight of the glass, such as: $55 \leq SiO_2 \leq 78\%$.

According to another embodiment of the use of the invention, which can be considered in combination with the preceding embodiment, the composition has a content of $Al_2O_3$ expressed as a percentage in total weight of the glass, such as: $0 \leq Al_2O_3 \leq 18\%$.

According to another embodiment of the use according to the invention the composition advantageously has a content of total iron (expressed in the form of $Fe_2O_3$) of 0.002 to 0.04% by weight in relation to the total weight of the glass, and preferably a content of total iron (expressed in the form of $Fe_2O_3$) of 0.002 to 0.02% by weight in relation to the total weight of the glass.

The following examples illustrate the invention without intention of limiting its coverage in any way.

**Examples**

The raw materials were mixed in powder form and placed in a melting pot in accordance with the composition specified in the table below.

| Composition | Content [% by weight] |
|---|---|
| $SiO_2$ | 57.7 |
| $K_2O$ | 6 |
| $Na_2O$ | 4.3 |
| $Al_2O_3$ | 7 |
| BaO | 8 |
| $ZrO_2$ | 3 |
| SrO | 7 |
| MgO | 2 |
| CaO | 5 |

(continued)

| Composition | Content [% by weight] |
|---|---|
| $Fe_2O_3$ total | 0.01 |
| $Cr_2O_3$ | 0.005 |

The optical properties of the glass sample according to the invention in sheet form were determined and in particular the absorption coefficient at wavelengths of 1050, 950 and 850 nm was determined by a transmission measurement on a Perkin Elmer lambda 950 spectrophotometer fitted with an integrating sphere 150 mm in diameter, the sample being placed at the inlet port of the sphere for the measurement. These same measurements were also conducted on a reference (comparative) sample of the same base composition without added chromium.

The table below shows the absorption coefficients at wavelengths 1050, 950 and 850 nm obtained for the sample with chromium according to the invention and for the reference.

| Sample | ppm of chromium (expressed in the form of $Cr_2O_3$) | ppm of iron (expressed in the form of $Fe_2O_3$) | Absorption coefficient at 1050 nm ($m^{-1}$) | Absorption coefficient at 950 nm ($m^{-1}$) | Absorption coefficient at 850 nm ($m^{-1}$) |
|---|---|---|---|---|---|
| Reference | 0 (no addition) | 100 | 4.8 | 4.6 | 4.2 |
| Invention | 50 | 100 | 2.1 | 2.1 | 2.4 |

These results show that the addition of chromium in a range of contents according to the invention enables the absorption coefficient at the wavelengths of 1050, 950 and 850 nm to be significantly decreased, and therefore in general enables the absorption of radiation in the near infrared to be reduced.

If the quantity of total iron is lower than that of the example according to the invention (for example, 80 or 70 ppm), the quantity of chromium necessary to obtain equivalent values for the absorption coefficient should be lower. Conversely, if the quantity of total iron is higher than that of the example according to the invention (for example, 130 or 150 ppm), the quantity of chromium necessary to obtain equivalent values for the absorption coefficient should be higher.

## Claims

1. Glass sheet having a composition that comprises the following in a content expressed in percentages of the total weight of glass:

   $55 \leq SiO_2 \leq 85\%$
   $0 \leq Al_2O_3 \leq 30\%$
   $0 \leq B_2O_3 \leq 20\%$
   $0 \leq Na_2O \leq 25\%$
   $0 \leq CaO \leq 20\%$
   $0 \leq MgO \leq 15\%$
   $0 \leq K_2O \leq 20\%$
   $5 < BaO \leq 20\%$
   $0.002 \leq$ total iron (expressed in the form of $Fe_2O_3$) $\leq 0.02\%$,
   **characterised in that** said composition comprises a chromium content such as : $0.0001\% \leq Cr_2O_3 \leq 0.03\%$, expressed in a percentage of the total weight of glass, and **in that** it has a content of $Fe^{2+}$ (expressed in the form of FeO) of less than 20 ppm.

2. Glass sheet according to the preceding claim, **characterised in that** the composition has a chromium content such as: $0.0005\% \leq Cr_2O_3 \leq 0.03\%$.

3. Glass sheet according to the preceding claim, **characterised in that** the composition has a chromium content such as: $0.001\% \leq Cr_3O_3 \leq 0.03\%$.

4. Glass sheet according to the preceding claim, **characterised in that** the composition has a chromium content such as: $0.002\% \leq Cr_2O_3 \leq 0.03\%$.

5. Glass sheet according to one of the preceding claims, **characterised in that** the composition has a content of $SiO_2$ expressed in a percentage of the total weight of the glass such as $55 \leq SiO_2 \leq 78\%$.

6. Glass sheet according to one of the preceding claims, **characterised in that** the composition has a content of $Al_2O_3$ expressed in a percentage of the total weight of the glass such as $0 \leq Al_2O_3 \leq 18\%$.

7. Glass sheet according to one of the preceding claims, **characterised in that** it has an absorption coefficient at wavelength 1050 nm of less than or equal to 5 $m^{-1}$.

8. Glass sheet according to the preceding claim, **characterised in that** it has an absorption coefficient at wavelength 1050 nm of less than or equal to 3.5 $m^{-1}$.

9. Glass sheet according to the preceding claim, **characterised in that** it has an absorption coefficient at wavelength 1050 nm of less than or equal to 2 $m^{-1}$.

10. Screen or panel or pad comprising at least one glass sheet according to one of claims 1 to 9, wherein said glass sheet defines a touch sensitive surface.

11. Screen or panel or pad according to the preceding claim, using FTIR or PSD optical technology.

12. Use of a glass sheet having a composition that comprises the following in a content expressed in percentages of the total weight of glass:

$55 \leq SiO_2 \leq 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$5 < BaO \leq 20\%$
$0.002 \leq$ total iron (expressed in the form of $Fe_2O_3$) $\leq 0.06\%$,
a content of chromium such as: $0.0001\% \leq Cr_2O_3 \leq 0.06\%$

in a device using an infrared radiation that propagates essentially inside said sheet.

13. Use according to the preceding claim, **characterised in that** the propagation of the infrared radiation occurs by total internal reflection.

**Patentansprüche**

1. Glasscheibe, deren Zusammensetzung Folgendes in einem Gehalt, ausgedrückt in Prozenten des Gesamtgewichts des Glases, umfasst:

$55 \leq SiO_2 \leq 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$5 < BaO \leq 20\%$
$0{,}002 \leq$ Gesamteisen (ausgedrückt in Form von $Fe_2O_3$) $\leq 0{,}02\%$,
**dadurch gekennzeichnet, dass** die Zusammensetzung einen Chromgehalt wie $0{,}0001\% \leq Cr_2O_3 \leq 0{,}03\%$, ausgedrückt in Prozent des Gesamtgewichts des Glases, umfasst, und dadurch, dass sie einen $Fe^{2+}$-Gehalt (ausgedrückt in Form von FeO) von weniger als 20 ppm aufweist.

**2.** Glasscheibe nach dem vorhergehenden Anspruch, **dadurch gekennzeichnet, dass** die Zusammensetzung einen Chromgehalt wie $0{,}0005\% \leq Cr_2O_3 \leq 0{,}03\%$ aufweist.

**3.** Glasscheibe nach dem vorhergehenden Anspruch, **dadurch gekennzeichnet, dass** die Zusammensetzung einen Chromgehalt wie $0{,}001\% \leq Cr_2O_3 \leq 0{,}03\%$ aufweist.

**4.** Glasscheibe nach dem vorhergehenden Anspruch, **dadurch gekennzeichnet, dass** die Zusammensetzung einen Chromgehalt wie $0{,}002\% \leq Cr_2O_3 \leq 0{,}03\%$ aufweist.

**5.** Glasscheibe nach einem der vorhergehenden Ansprüche, **dadurch gekennzeichnet, dass** die Zusammensetzung einen $SiO_2$-Gehalt, ausgedrückt in Prozent des Gesamtgewichts des Glases wie $55 \leq SiO_2 \leq 78\%$ aufweist.

**6.** Glasscheibe nach einem der vorhergehenden Ansprüche, **dadurch gekennzeichnet, dass** die Zusammensetzung einen $Al_2O_3$-Gehalt, ausgedrückt in Prozent des Gesamtgewichts des Glases wie $0 \leq Al_2O_3 \leq 18\%$ aufweist.

**7.** Glasscheibe nach einem der vorhergehenden Ansprüche, **dadurch gekennzeichnet, dass** sie einen Absorptionskoeffizienten bei einer Wellenlänge von 1050 nm von kleiner oder gleich 5 m$^{-1}$ aufweist.

**8.** Glasscheibe nach dem vorhergehenden Anspruch, **dadurch gekennzeichnet, dass** sie einen Absorptionskoeffizienten bei einer Wellenlänge von 1050 nm von kleiner oder gleich 3,5 m$^{-1}$ aufweist.

**9.** Glasscheibe nach dem vorhergehenden Anspruch, **dadurch gekennzeichnet, dass** sie einen Absorptionskoeffizienten bei einer Wellenlänge von 1050 nm von kleiner oder gleich 2 m$^{-1}$ aufweist.

**10.** Bildschirm oder Panel oder Pad, umfassend mindestens eine Glasscheibe nach einem der Ansprüche 1 bis 9, wobei die Glasscheibe eine berührungsempfindliche Oberfläche definiert.

**11.** Bildschirm oder Panel oder Pad nach dem vorhergehenden Anspruch unter Verwendung der optischen FTIR- oder PSD-Technologie.

**12.** Verwendung einer Glasscheibe, deren Zusammensetzung Folgendes in einem Gehalt, ausgedrückt in Prozenten des Gesamtgewichts des Glases, umfasst:

$55 \leq SiO_2 \leq 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$5 < BaO \leq 20\%$
$0{,}002 \leq$ Gesamteisen (ausgedrückt in Form von $Fe_2O_3$) $\leq 0{,}06\%$,
einen Chromgehalt wie $0{,}0001\% \leq Cr_2O_3 \leq 0{,}06\%$,

in einer Vorrichtung unter Verwendung einer Infrarotstrahlung, die sich im Wesentlichen innerhalb der Scheibe ausbreitet.

**13.** Verwendung nach dem vorhergehenden Anspruch, **dadurch gekennzeichnet, dass** die Ausbreitung der Infrarotstrahlung durch Totalreflexion erfolgt.

**Revendications**

**1.** Feuille de verre ayant une composition qui comprend les suivants à une teneur exprimée en pourcentage du poids total de verre :

$55 \leq SiO_2 \leq 85 \%$
$0 \leq Al_2O_3 \leq 30 \%$

$0 \le B_2O_3 \le 20 \%$
$0 \le Na_2O \le 25 \%$
$0 \le CaO \le 20 \%$
$0 \le MgO \le 15 \%$
$0 \le K_2O \le 20 \%$
$5 < BaO \le 20 \%$
$0,002 \le$ fer total (exprimé sous la forme de $Fe_2O_3$) $\le 0,02 \%$,
**caractérisée en ce que** ladite composition comprend une teneur en chrome telle que : $0,0001 \% \le Cr_2O_3 \le 0,03 \%$, exprimée en pourcentage du poids total de verre, et **en ce qu'**elle a une teneur en $Fe^{2+}$ (exprimée sous la forme de FeO) inférieure à 20 ppm.

2. Feuille de verre selon la revendication précédente, **caractérisée en ce que** la composition a une teneur en chrome telle que : $0,0005 \% \le Cr_2O_3 \le 0,03 \%$.

3. Feuille de verre selon la revendication précédente, **caractérisée en ce que** la composition a une teneur en chrome telle que : $0,001 \% \le Cr_2O_3 \le 0,03 \%$.

4. Feuille de verre selon la revendication précédente, **caractérisée en ce que** la composition a une teneur en chrome telle que : $0,002 \% \le Cr_2O_3 \le 0,03 \%$.

5. Feuille de verre selon l'une des revendications précédentes, **caractérisée en ce que** la composition a une teneur en $SiO_2$ exprimée en pourcentage du poids total du verre telle que $55 \le SiO_3 \le 78 \%$.

6. Feuille de verre selon l'une des revendications précédentes, **caractérisée en ce que** la composition a une teneur en $Al_2O_3$ exprimée en pourcentage du poids total du verre telle que $0 \le Al_2O_3 \le 18 \%$.

7. Feuille de verre selon l'une des revendications précédentes, **caractérisée en ce qu'**elle a un coefficient d'absorption à une longueur d'onde de 1050 nm inférieur ou égal à 5 m$^{-1}$.

8. Feuille de verre selon la revendication précédente, **caractérisée en ce qu'**elle a un coefficient d'absorption à une longueur d'onde de 1050 nm inférieur ou égal à 3,5 m$^{-1}$.

9. Feuille de verre selon la revendication précédente, **caractérisée en ce qu'**elle a un coefficient d'absorption à une longueur d'onde de 1050 nm inférieur ou égal à 2 m$^{-1}$.

10. Écran ou panneau ou tablette comprenant au moins une feuille de verre selon l'une des revendications 1 à 9, dans lequel ladite feuille de verre définit une surface tactile.

11. Écran ou panneau ou tablette selon la revendication précédente, utilisant la technologie optique FTIR ou PSD.

12. Utilisation d'une feuille de verre ayant une composition qui comprend les suivants à une teneur exprimée en pourcentage du poids total de verre :

$55 \le SiO_2 \le 85 \%$
$0 \le Al_2O_3 \le 30 \%$
$0 \le B_2O_3 \le 20 \%$
$0 \le Na_2O \le 25 \%$
$0 \le CaO \le 20 \%$
$0 \le MgO \le 15 \%$
$0 \le K_2O \le 20 \%$
$5 < BaO \le 20 \%$
$0,002 \le$ fer total (exprimé sous la forme de $Fe_2O_3$) $\le 0,06 \%$,
une teneur en chrome telle que : $0,0001 \% \le Cr_2O_3 \le 0,06 \%$ dans un dispositif utilisant un rayonnement infrarouge qui se propage essentiellement à l'intérieur de ladite feuille.

13. Utilisation selon la revendication précédente, **caractérisée en ce que** la propagation du rayonnement infrarouge se produit par réflexion interne totale.

**EP 3 024 786 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013021300 A1

- US 20070161492 A1